Europäisches Patentamt

European Patent Office

Office européen des brevets

(11) Publication number: **0 468 474 A2**

# EUROPEAN PATENT APPLICATION

(21) Application number: **91112416.2**

(22) Date of filing: **24.07.91**

(51) Int. Cl.5: **H04N 5/33**

(30) Priority: **24.07.90 JP 195509/90**

(43) Date of publication of application:
**29.01.92 Bulletin 92/05**

(84) Designated Contracting States:
**DE GB**

(71) Applicant: **FUJITSU LIMITED**
**1015, Kamikodanaka Nakahara-ku**
**Kawasaki-shi Kanagawa 211(JP)**

(72) Inventor: **Hanafusa, Tsutomu, c/o Fujitsu**
**Limited**
**Patent Department, 1015 Kamikodanaka,**
**Nakahara-ku**
**Kawasaki-shi, Kanagawa 211(JP)**
Inventor: **Shiraishi, Kikuo, c/o Fujitsu Limited**
**Patent Department, 1015 Kamikodanaka,**
**Nakahara-ku**
**Kawasaki-shi, Kanagawa 211(JP)**

(74) Representative: **Stebbing, Timothy Charles et**
**al**
**Haseltine Lake & Co. Hazlitt House 28**
**Southampton Buildings Chancery Lane**
**London WC2A 1AT(GB)**

(54) **A method of compensating scattered characteristics of infrared detector elements.**

(57) A method of compensating scattered characteristics of infrared detector elements, in which a thermal image of a scene is input via a focusing lens (5) onto the detector elements (9). The image on the detector elements is defocused by adjusting the focusing lens; and a first signal level output from each detector element is measured. Then, the image is focused, and a second signal level output from each detector element is compensated using the first signal level. In the case where the image is optically scanned over the linearly arranged detector elements, the first signal level may be averaged over a number of scans to obtain an average level of each detector element, and may be further averaged over a number of different scan directions. The scan direction is rotated by rotating a prism (4) around the light path (P), to predetermined angular positions between 0 to 90 degrees. This enables the defocused light incident on the detector elements to be more properly averaged, to provide an improved average level. Thermal image data of a central portion of the scene may be excluded from the averaging operation, because it includes noise due to a narcissus effect, and because even if scan directions are varied by prism rotation the central image portion stays the same, both effects deteriorating the averaging.

Fig. 1

2

The present invention relates to a method of compensating scattered characteristics of infrared detector elements, as used for example in a multiple-element-type infrared detector employed in a thermal imaging system.

InSb (indium-antimony), $Hg_{1-x}Cd_xTe$ (mercury-cadmium-tellurium), etc., have been employed as infrared detector elements in thermal imaging systems. However, individual elements do not have identical output characteristics, and the scattered characteristics of the elements are individually adjusted using an electric circuit connected to each element or numerically adjusted with a program provided in the system.

In a usual thermal imaging system, a reference plate having a similar temperature to an image detecting apparatus is temporarily placed in the light path to the detectors, typically in front of the infrared camera, in order to input equal amounts of light (infrared radiation) to all of the detector elements. In this state, amounts of compensation of DC offsets of the individual detector elements are determined from output signal levels of the elements, and are stored in a memory. Then, in practical operation of the apparatus, the reference plate is removed so that the camera views a scene to be monitored. A thermal image of the scene is constituted from the detector output signals whose DC offsets are compensated by adding the thus-determined amounts of compensation read out of the memory.

There are problems with this type of thermal imaging system as follows. The temperature of the reference plate does not always correspond to the thermal range of the scene to be monitored, which can vary widely in general. Therefore, compensation appropriate to the scene cannot always be accurately achieved by DC offset compensation using a reference plate having a certain fixed temperature. Moreover, a mechanism is required to place or remove the reference plate into or from the light path, which adds to the bulk of the system and requires troublesome and time-consuming operation.

An embodiment of the invention may provide a simple and accurate method for compensating scattered characteristics of infrared temperature detecting elements without requiring an additional mechanism.

In a method of the present invention, a scene to be monitored is imaged through a focusing means onto the infrared detector elements; the image on the infrared detector elements is defocused by adjusting the focusing means so that its light content is averaged equally onto all of the infrared detector elements; signal levels output from individual detector elements are measured as first signal levels of the detector elements; the focusing means is adjusted so as to focus the image on the detector elements; and second signal levels output from the individual infrared detector elements are compensated according to the respective first signal levels already obtained.

In a case where the image is optically scanned across linearly arranged detector elements, the first signal level may be averaged over a predetermined number of scans to obtain a first averaged level of each detector element.

The optical averaging may be further improved by averaging the first signal levels or the first averaged level of each element over a number of different scan directions slanted with respect to the scene. The scan direction is rotated by rotating a prism or equivalent means, placed in a light path between the scene and a scanning mirror, around the light path, to predetermined angular positions between 0 to 90 degrees. This allows the defocused light input to the detector elements to be more properly averaged, to provide a more accurate average level.

Thermal image (temperature) data of a central portion of the image may be excluded from the averaging operation, because it includes noise caused by a narcissus effect, and because in the case where the scan directions are varied by prism rotation the central image portion stays the same, deteriorating the averaging of the image.

Reference is made, by way of example, to the accompanying drawings, in which:-

Fig. 1 schematically illustrates a thermal imaging system embodying the present invention;

Fig. 2 schematically illustrates linearly arranged infrared detector elements employed in the Fig. 1 embodiment;

Figs. 3(a) and (b) illustrate rotation of the prism; and

Fig. 4 shows scan directions of light when the prism is rotated 0 and 45 degrees.

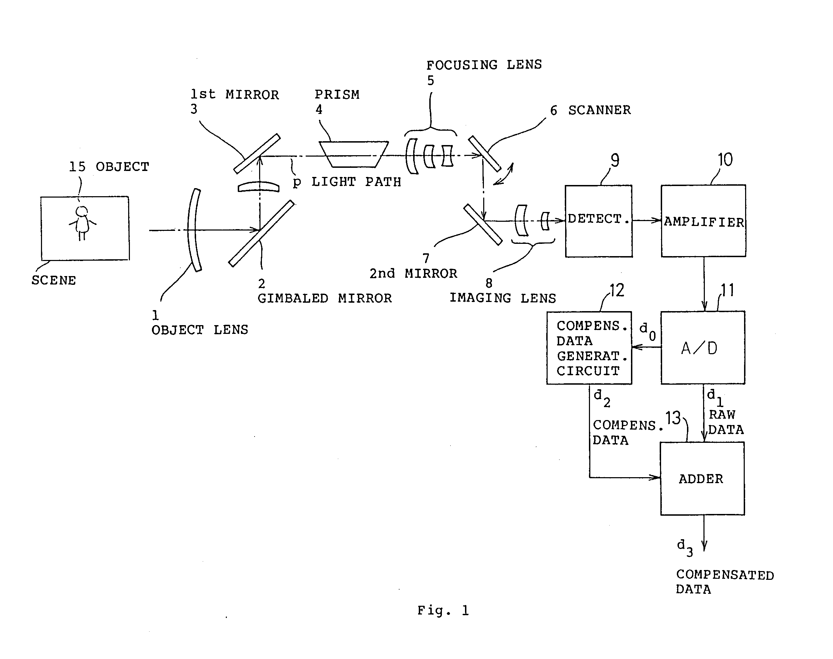

A first preferred embodiment of the present invention applied to an infrared (referred to subsequently as IR) camera will now be described in detail with reference to Fig. 1, where linearly arranged infrared detector elements (below, line detectors) are employed.

Infrared light from a scene, whose thermal image is desired to be monitored by the camera, is input via an object lens 1, a gimbaled mirror 2, a first stationary mirror 3, a prism 4, a focusing lens 5, a scanning mirror 6, a second stationary mirror 7 and an imaging lens 8, onto infrared line detectors 9 of the change-coupled device type (IR CCD detectors). Gimbaled mirror 2 is provided for deflecting the camera view to a scene deviated up, down, right or left, from the scene directly in front of the camera without moving the camera body. First and second stationary mirrors 3 and 7 are merely provided for allowing a convenient layout of the other optical components. Prism 4 is a trapezoid prism (functioning as a triangular prism) rotatable around the light path from first mirror 3 to focusing lens 5 so as to cancel the rotation of the image caused by gimbaled mirror 2 when looking at an object located away from the direct front of the camera, so that the object can be viewed naturally, i.e. in its proper orientation without a slant. The function of prism 4 is explained later in detail. Focusing lens 5 is formed of a plurality of lenses, which together with imaging lens 8 focus the image onto detectors 9.

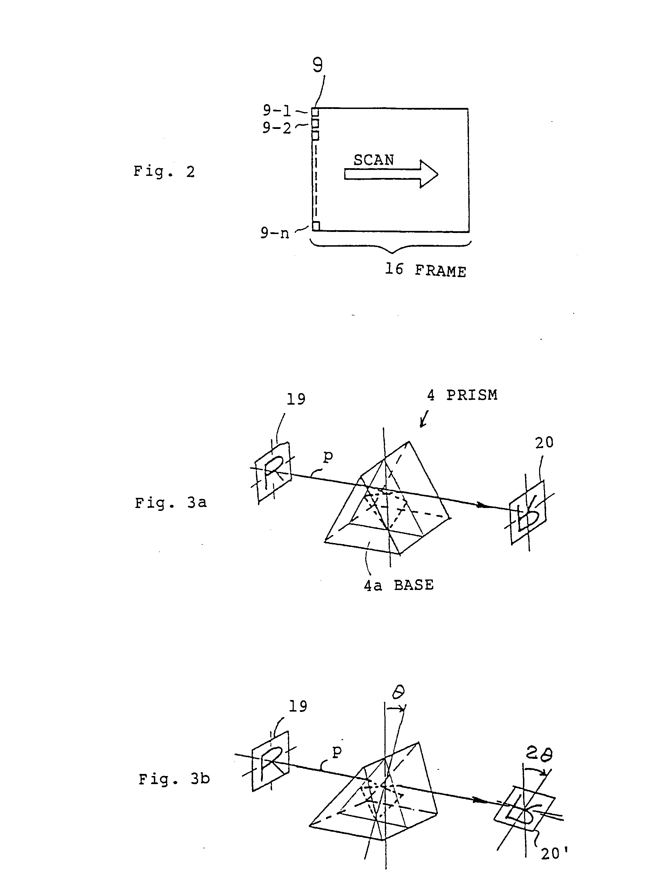

Scanning mirror 6 swings, i.e. scans, the image input from focusing lens 5, in a horizontal direction with respect to vertical lines of detectors (line detectors) 9 as shown in Fig. 2. The light received by each element 9-1, 9-2 --- 9-n of the line detectors 9 is converted to an electrical signal; this signal is amplified in amplifier 10 and then converted to a digital signal by an analog-to-digital converter 11 (A/D converter). This configuration and process are the same as employed in an existing infrared image-detecting apparatus.

In a method embodying the present invention, compensation is performed as follows. When monitoring a distant scene, the focusing lens 5 is adjusted so as to focus on a near-most distance (minimum focusing distance), or when monitoring a nearby scene, focusing lens 5 is adjusted so as to focus on a far-most distance (e.g. infinity). In other words, the image of the scene is defocused as much as possible. The resulting highly defocused image provides an almost even light distribution, the intensity of which represents an average of the infrared radiation from the scene to be monitored; In other words, the scene is optically averaged.

Then, the resulting signals are serially output from the detectors in this defocused state, and are amplified by amplifier 10 and A/D-converted by A/D converter 11. The A/D-converted signals $d_0$ for each detector element are input to compensation signal generator 12, where they are further averaged by an electronic circuit for a single or a predetermined number of scans, so as to provide a detector element level, and the signal levels are averaged to provide average levels $d_2$ as compensation data. Then, the average level data $d_2$ for each detector element is stored in a RAM (random access memory) provided in compensation data generator 12 but not shown in Fig. 1.

Next, focusing lens 5 is adjusted to focus on the scene which was previously viewed in a defocused state. The resulting signals are output from detectors 9, amplified by amplifier 10 and A/D-converted by A/D converter 11 so as to generate raw data $d_1$. The raw data $d_1$ is modified by an adder 13 using the average level $d_2$ read out of the RAM. For example, the respective average level is subtracted from each item of raw data to give the compensated data. In other words, the DC offset is adjusted(compensated) for each detector element by using the respective average level data $d_2$. Although it was just stated that this compensation operation is carried out by a compensation data generator 12 and adder 13, these operations may also be carried out by a CPU (central processor unit) and appropriate software. Compensated data $d_3$ output from the adder 13 is used for displaying a thermal image on a display device, or further processed for automatically detecting an abnormal temperature rise in the scene, for example.

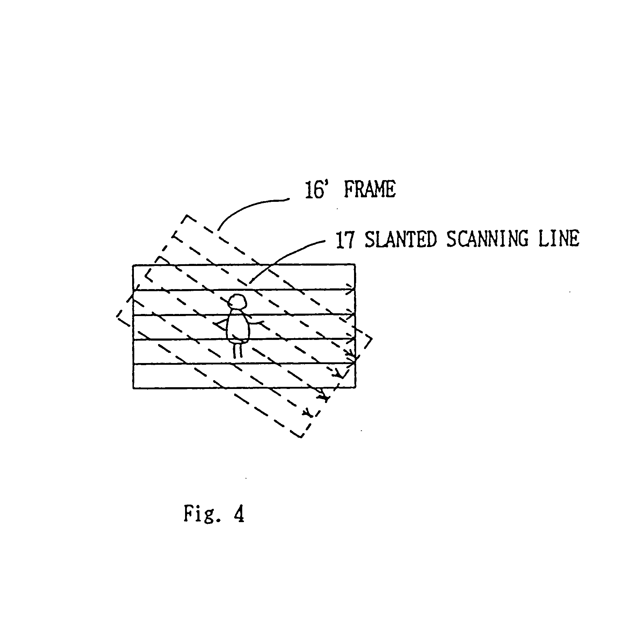

A second preferred embodiment of the present invention will now be described. In the process previously described, averaging is not always perfectly achieved depending on the shape, size and location of objects (heat sources) in the scene. In order to achieve an improved averaging of the scene to be monitored, prism 4 is rotated around the light path so as to skew the scan direction denoted by numeral 17 in Fig. 4. In Fig. 4, scan directions of 0 and 45 degrees are drawn by way of example.

The function of prism 4 will now be explained, referring to a triangular prism. Prism 4 is a so-called derotation prism having an isosceles triangle cross-section cut rectangularly to the prism axis. An image input to prism 4 in a direction parallel to its base 4a is inverted in the vertical direction (perpendicular to base 4a) but not inverted in the horizontal direction (parallel to the axis of the prism). This is shown in Fig. 3(a), where the input scene 19 is represented by the character R, and its image 20 after passing through the prism is shown by a character R inverted only in the vertical direction. When the prism is rotated around its light path p by $\theta$ degrees, its image 20' shown with an inverted R is rotated by $2\theta$ degrees. Therefore, a range of rotation of 0 to 90 degrees by the prism 4 is enough to cover all possible scan directions (0 to 180 degrees) across the scene.

Preferably, the rotation of the prism is carried out several times, e.g. in steps of 10 degrees, that is, 9 times in total. Signals output from the individual detector elements obtained in all the rotated positions are averaged for each detector element over a predetermined number of scans in the same way as in the first embodiment, so as to provide a second average level $d_2'$ of each detector element. Theoretically, even a single scan is sufficient for this averaging operation; however, in practice the averaging operation is preferably carried out, for example, over 16 scans. The second average level $d_2'$ thus obtained is better, i.e. more uniformly, averaged; that is, it more accurately represents the mean temperature of the whole scene to be monitored.

In the above embodiments the unequal output characteristics of line detector elements can be individually properly compensated, even when the thermal range of the scene to be monitored is different from the temperature of the image detecting apparatus. This is because no reference plate, which inherently has the temperature of the apparatus, is required and the compensation is based on an average level obtained by optically as well as electronically averaging the real temperatures of the object scene itself. Accordingly, a high-quality thermal image can be obtained. Moreover, no mechanism for installing or removing the reference plate is required. Thus, the apparatus can be small, and the handling thereof simple.

A third preferred embodiment of the present invention will now be described. Although in the second embodiment it was stated that optical averaging is performed over the whole scene, the central portion of the scene always remains in the central portion of the scanned frame, which reduces the quality of the averaging. Moreover, in a practical thermal image sensing apparatus, an object lens 1 and focusing lens 5, etc., are of course located in front of the IR detectors 9. A thermal image of the detectors themselves, albeit at a low level corresponding to a temperature as low as typically -200°C, is reflected by these optical components back to the detectors. In other words, the detectors detect their own image, causing, for example, a spurious 0.8°C temperature drop, which is as much as 3 to 5 times the NETD (noise equivalent temperature difference), in the signal at the central portion. This is called a narcissus phenomenon.

In order to avoid these problems, in the third embodiment the data of the picture cells (detector elements) at the central portion of the frame is rejected from the averaging operation in compensation data generator 12. The central portion to be rejected to obtain the improved average level is typically determined as the area in which the temperature signal level drops below a threshold level. This threshold level is set at a temperature which is lower by the NETD of the apparatus (e.g. 0.2°C) than the average level (first average level) determined in the second embodiment. The signals below this threshold level are excluded from the averaging operation by a threshold circuit provided in compensation data generating circuit 12. Then, compensation data for each detector element is generated in a similar way to the second embodiment, but based on the determined second average excluding the central portion. Thus, in the third embodiment, the resulting more appropriate average provides a still more accurate compensation of the detector element output characteristics.

Although, in the above explanation, the IR detectors are of the linearly arranged type across which the image is mechanically scanned, it is apparent that the concept of the present invention can be applied to an image-detecting apparatus having a two-dimensional array of IR detectors without mechanical scanning. To realise averaging in accordance with the second embodiment, the average level of each detector element in the defocused state is obtained by averaging the output signal levels of the detector elements for all the angular positions of the prism.

In addition, although the IR detectors are referred to above as of CCD type, of course the present invention may be applied to types of detector other than the CCD type, and the detectors may also be capable of detecting non-infrared radiation.

Instead of the above-described focusing lens and prism, any other optical means having equivalent focusing or image-rotating functions may be used, and the same also applies to the remaining optical components of the above-described system.

Moreover, whilst in the above embodiments compensation is carried out for adjusting DC offsets of the detector elements, the present invention can also be applied to compensate other particular characteristics subject to a scattered distribution, such as the gain of individual elements; in this case the averaging operation must be carried out twice or more looking at different scenes of different thermal range so that the output levels of all the elements are calculated to determine the amount of compensation of the particular characteristics.

Numerous modifications and changes will readily occur to those skilled in the art, and all suitable modifications and equivalents may be resorted to, falling within the scope of the accompanying claims.

**Claims**

1. A method of compensating scattered characteristics of infrared detector elements, comprising the steps of:-

   (a) forming an image of a scene to be monitored on the detector elements;

   (b) defocusing the image on the detector elements, so that a substantially even light distribution is incident on substantially all of the detector elements;

   (c) measuring a first signal level output from each of the detector elements;

   (d) focusing the image onto the detector elements;

   (e) measuring a second signal level output from each of the detector elements; and

   (f) for each of the detector elements, compensating said second signal level by employing said first signal level, respectively.

2. A method as claimed in claim 1, wherein the detector elements are arranged in a line, and the method further comprises after step (c) the step of:-

averaging said measured signal levels of each detector element over a predetermined number of scans so as to provide a respective first averaged level,

and wherein step (f) is carried out by employing said first averaged level for each detector element.

3. A method as claimed in claim 1 or 2, wherein the detector elements comprise a charge-coupled device.

4. A method as claimed in claim 1, 2, or 3, wherein the scattered characteristic to be compensated is a DC (direct current) offset.

5. A method as claimed in claim 2, wherein step (f) comprises the step of:-

subtracting said first averaged level from said second signal level, for each detector element.

6. A method of compensating scattered characteristics of infrared detector elements arranged in a line and provided in an infrared thermal imaging apparatus, an image of a scene to be monitored being scanned across the line, comprising the steps of:-

(a) inputting the image via an image rotating means and a focusing means, each placed in a light path of said scene, onto the detector elements;

(b) defocusing the image on said detector elements;

(c) measuring a first signal level output from each of the detector elements;

(d) averaging said measured first signal levels of each detector element for a predetermined number of scans so as to provide a respective first averaged level;

(e) rotating said image rotating means around said light path by a predetermined angle so as to rotate a direction of scanning of the image;

(f) repeating said steps (c) to (e), at a plurality of predetermined angular positions of said image rotating means;

(g) averaging said first averaged levels measured at all of said angular positions for each detector element, so as to provide a second averaged level of each detector element;

(h) fixing said angular position at an angle where the image is properly oriented with respect to the detector elements;

(i) focusing the image onto the detector elements;

(j) measuring a second signal level output from each of the detector elements; and

(k) for each of the detector elements, compensating said second signal level by employing the respective second averaged level.

7. A method as claimed in claim 6, wherein said image rotating means is a derotation prism.

8. A method as claimed in claim 7, wherein said prism is rotated in a range of 0 to 90 degrees.

9. A method as claimed in any of claims 1 to 5, wherein step (e) is carried out for an area excluding a central portion of the image.

10. A method as claimed in claim 6, 7 or 8, wherein step (d) is carried out for an area excluding a central portion of the image.

11. A method as claimed in claims 1, 2 and 9 in combination, wherein said central portion of the image is a portion in which a measured temperature is below a predetermined threshold level which is lower than said first averaged level by a noise equivalent temperature difference of the apparatus.

12. A method as claimed in claim 10, wherein said central portion of the image is a portion in which a measured temperature is below a predetermined threshold level which is lower than said second averaged level by a noise equivalent temperature difference of the apparatus.

13. A method of compensating scattered characteristics of two-dimensionally arranged infrared detector elements provided in an infrared temperature detecting apparatus, comprising the steps of:-

(a) inputting an image of a scene through an image-rotating means and a focusing means, each placed in a light path of said scene, onto the detector elements;

(b) defocusing the image on said detector elements;

(c) measuring first signal levels output from each of detector elements;

(d) rotating said image rotating means around said light path by a predetermined angle so as to rotate an orientation of the image;

(e) repeating said steps (c) to (d), at a plurality of predetermined angular positions of said image rotating means;

(f) averaging said first signal levels measured at all of said angular positions for each detector element so as to provide an averaged level of each detector element;

(g) fixing said angular position at an angle where the image is properly oriented with respect to the detector elements;

(h) focusing the image onto the detector elements;

(i) measuring second signal levels output from each of the detector elements; and

(j) for each of the detector elements, compensating said second signal level by employing the respective averaged level.

FOCUSING LENS
5

1st MIRROR
3

PRISM
4

6 SCANNER

15 OBJECT

p LIGHT PATH

9

10

DETECT.

AMPLIFIER

SCENE

2
GIMBALED MIRROR

7
2nd MIRROR

8
IMAGING LENS

1
OBJECT LENS

12

COMPENS.
DATA
GENERAT.
CIRCUIT

$d_0$

11

A/D

$d_2$

COMPENS.
DATA

13

$d_1$
RAW
DATA

ADDER

$d_3$

COMPENSATED
DATA

Fig. 1

Fig. 2

9

9-1
9-2

SCAN

9-n

16 FRAME

Fig. 3a

19

4 PRISM

p

20

4a BASE

Fig. 3b

19

θ

p

2θ

20'

16' FRAME

17 SLANTED SCANNING LINE

Fig. 4